# EUROPEAN PATENT SPECIFICATION

(11) **EP 4 312 512 B1**
(45) Date of publication and mention of the grant of the patent: **01.10.2025**
(21) Application number: 22719080.8
(22) Date of filing: 30.03.2022
(51) Int. Cl.: A01G 15/00, B64D 1/16, H01M 8/04119

(54) **EXHAUST WATER VAPOR MANAGEMENT FOR HYDROGEN FUEL CELL-POWERED AIRCRAFT**
ABGASDAMPFVERWALTUNG FÜR EIN MIT WASSERSTOFFBRENNSTOFFZELLEN ANGETRIEBENES FLUGZEUG
GESTION DE VAPEUR D'EAU D'ÉCHAPPEMENT POUR AÉRONEF ALIMENTÉ PAR PILE À COMBUSTIBLE À HYDROGÈNE

(30) Priority: 31.03.2021 US 202163168484 P
(43) Date of publication of application: 07.02.2024
(73) Proprietor: Zeroavia Ltd., Kemble Cirencester Gloucestershire GL7 6BA (GB)
(72) Inventor: MIFTAKHOV, Valery, Hollister, California 95023 (US)
(74) Representative: Osha BWB
(86) International application number: PCT/US2022/022641
(87) International publication number: WO 2022/212575

(56) References cited:
- US-A1- 2004 040 312
- US-A1- 2006 029 849
- US-A1- 2008 001 026
- US-A1- 2022 009 379

## Description

### CROSS-REFERENCE TO RELATED APPLICATION

This application claims priority to and benefit of co-pending U.S. Provisional Patent Application No. 63/168,484 filed on March 31, 2021, entitled "EXHAUST WATER VAPOR MANAGEMENT FOR HYDROGEN FUEL CELL-POWERED AIRCRAFT" by Valery Miftakhov.

### FIELD OF THE TECHNOLOGY

Embodiments of the present technology relate generally to hydrogen fuel cell-powered aircraft, and more particularly, to systems and methods for refueling hydrogen fuel cell-powered aircraft.

### BACKGROUND

While the fundamental theory and application of using hydrogen fuel cells to power electrically-driven aircrafts is proven and established, there remain many challenges with respect to the specific integration of hydrogen fuel cell technology in aircraft design. For example, just like existing conventionally powered aircraft designs, the mechanical, electronic, fluidic, and thermal systems of hydrogen fuel cell-powered aircrafts need to be properly engineered to provide appropriate power, efficiency, safety, and physical characteristics. In addition, the use of hydrogen fuel cell technology presents alternative or additional challenges not encountered in conventionally powered aircraft design. US2004/040312 discloses an apparatus for producing water onboard of an aircraft by using one or more fuel cells.

### SUMMARY

Embodiments of this presentation relate to a method to control exhaust water from a hydrogen fuel cell in an aircraft and to an apparatus for managing waste water from a hydrogen fuel cell in an aircraft, as defined in the appended claims.

According to embodiments of this presentation, the method comprises expelling the ice from the aircraft such that water vapor cloud formation is inhibited.

### BRIEF DESCRIPTION OF THE DRAWINGS

Aspects of the present technology are illustrated by way of example, and not by way of limitation, in the accompanying drawings, wherein:
Figure 1 is a side view of a hydrogen fuel cell-powered aircraft, in accordance with an embodiment.
Figure 2 is a schematic illustration of a hydrogen fuel cell-electric engine system of the aircraft of Figure 1, in accordance with an embodiment.
Figure 3 is a block diagram of an exhaust system of the aircraft of Figure 1, in accordance with an embodiment.
Figure 4 is a side view of the aircraft of Figure 1 in use flying above an altitude threshold and producing exhaust, in accordance with an embodiment.

The drawings referred to in this description should be understood as not being drawn to scale except if specifically noted.

### DESCRIPTION OF EMBODIMENTS

The detailed description set forth below in connection with the appended drawings is intended as a description of various embodiments of the present technology and is not intended to represent the only embodiments in which the present technology is to be practiced. Each embodiment described in this disclosure is provided merely as an example or illustration of the present technology, and should not necessarily be construed as preferred or advantageous over other embodiments. In some instances, well known methods, procedures, objects, and circuits have not been described in detail as not to unnecessarily obscure aspects of the present disclosure.

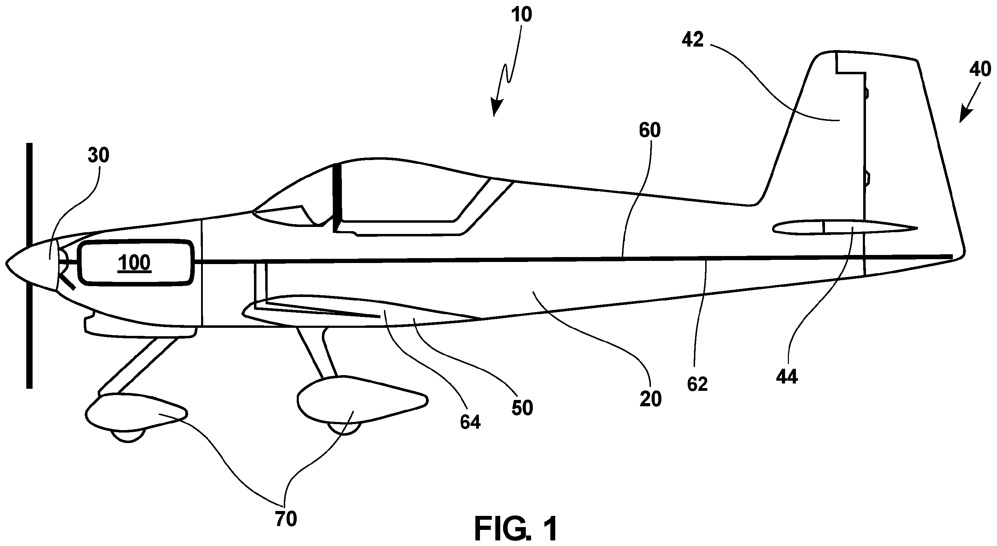

Referring to Figure 1, a hydrogen fuel cell-powered aircraft 10 is shown in accordance with one embodiment. In one embodiment, hydrogen fuel cell-powered aircraft 10 is a turboprop aircraft. In another embodiment, hydrogen fuel cell-powered aircraft 10 is another aircraft type/configuration other than a turboprop. However, the hydrogen fuel cell-powered aircraft 10 disclosed is a turboprop in one embodiment and is used for purposes of clarity in the following discussion.

Hydrogen fuel cell-powered aircraft 10 generally includes a fuselage 20, a propulsor 30 (e.g., a propeller) disposed at a forward end of fuselage 20, a tail 40 disposed at a rear end of fuselage 20 and including a vertical stabilizer 42 and a pair of horizontal stabilizers 44 extending outwardly from either side of tail 40, a pair of wings 50 extending outwardly from either side of fuselage 20, an exhaust system 60 including a fuselage portion 62 and/or a wing portion 64, a pair of wheel assemblies 70, and a hydrogen fuel cell-powered electric engine system 100.

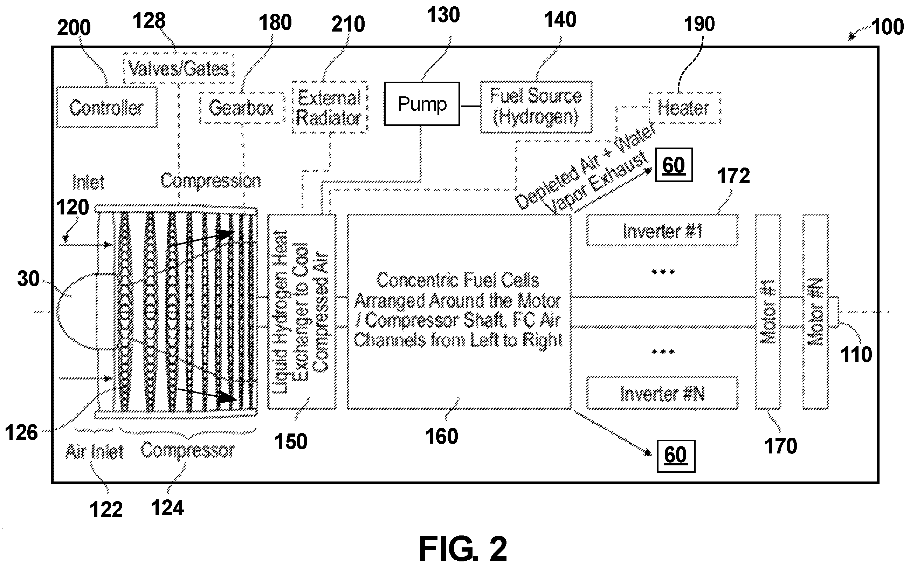

With additional reference to Figure 2, hydrogen fuel cell-powered electric engine system 100 is shown in accordance with one embodiment. In one embodiment, hydrogen fuel cell-powered electric engine system 100 includes an elongated shaft 110 that extends through the powertrain of system 100 to function as a common shaft of the powertrain. In another embodiment, the powertrain of system 100 may include other configurations. Elongated shaft 110 supports and/or is coupled to a propulsor 30, an air compressor system 120, a pump 130 in fluid communication with a fuel source 140, a heat exchanger 150 in fluid communication with air compressor system 120, a hydrogen fuel cell stack 160 in fluid communication with heat exchanger 150, and a motor assembly 170 disposed in electrical communication with fuel cell stack 150.

Air compressor system 120 includes an air inlet portion 122 and a compressor portion 124 positioned rearwardly of air inlet portion 122 to enable uninterrupted, axial delivery of airflow into compressor portion 124 in the forward to rear direction. Compressor portion 124 supports one or more rotatable compressor wheels 126 that rotate in response to rotation of elongated shaft 110 for compressing air received through air inlet portion 122 and pushing the compressed air to fuel cell stack 160 wherein the compressed air is converted to electrical energy.

In one embodiment, a number of compressor wheels 126 and/or a diameter, longitudinal spacing, and/or configuration thereof can be modified as desired to change the amount of air supply, e.g., to increase power. In one embodiment, these compressor wheels/stages 126 can be implemented as axial or centrifugal compressor stages. Further, the compressor portion 124 can have one or more bypass valves and /or wastegates 128 to regulate the pressure and flow of the air that enters the downstream fuel cell stack 160, as well as to manage the cold air supply to any auxiliary heat exchangers in the system 100.

In one embodiment, air compressor system 120 can optionally be mechanically coupled to elongated shaft 110 via a gearbox 180 to enable modification (increase and/or decrease) of the compressor turbine rotations per minute (RPM) and, thus, to change the airflow to fuel cell stack 160. In particular, gearbox 180 enables the airflow, or portions thereof, to be exhausted for controlling a rate of airflow through the fuel cell stack 160, and thus, controlling the output power.

In one embodiment, heat exchange 150, or other suitable gas management system, controls thermal and/or humidity characteristics of the compressed air from air compressor system 120 for conditioning the compressed air before entering fuel cell stack 160. That is, heat exchanger 150 cools the compressed air received from air compressor system 120 with the assistance of the pumped hydrogen fuel. Fuel source 140 may store, for example, hydrogen fuel cryogenically (e.g., as liquid hydrogen or cold hydrogen gas) and is operatively coupled to heat exchanger 150 via pump 130 which pumps the fuel from fuel source 140 to heat exchanger 150 for conditioning the compressed air.

For example, the fuel, while in the heat exchanger 150, becomes gasified and the hydrogen gas is heated in the heat exchanger 150 to a working temperature of the fuel cell stack 160, which also takes heat out of the compressed air, enabling control of flow through the heat exchanger 150. Pump 130 can be coaxially supported on elongated shaft 110 for actuation thereof in response to rotation of elongated shaft 110, or may be otherwise configured.

In one embodiment, a heater 190 can be coupled to or included within heat exchanger 150 to increase the heat as necessary, for instance, when running under a low power regime. Additionally, and/or alternatively, motor assembly 170 can be coupled to heat exchanger 150 for looping in the cooling/heating loops from motor assembly 170 as necessary. Such heating/cooling control can be managed, for instance, via a controller 200 of system 100. In one embodiment, fuel source 140 can be disposed in fluid communication with motor assembly 170 or any other suitable component to facilitate cooling of such components.

With continuing reference to Figure 2, in one embodiment, fuel cell stack 160 of system 100 is coaxially supported on elongated shaft 110 such that the air channels of fuel cell stack 160 is oriented in substantially parallel relation with elongated shaft 110. Fuel cell stack 160 is in the form of a proton-exchange membrane fuel cell (PEMFC) or other suitable fuel cell stack capable of converting chemical energy liberated during the electrochemical reaction of hydrogen and oxygen to electrical energy (e.g., direct current). In one embodiment, water vapor is exhausted from fuel cell stack 160 to exhaust system 60. Exhaust system 60 is described in greater detail below.

In one embodiment, the electrical energy generated from fuel cell stack 160 is transmitted to motor assembly 170, which is also coaxially supported on elongated shaft 110. In one embodiment, system 100 may include one or more external radiators 210 to facilitate airflow and, in one embodiment, for additional cooling.

In one embodiment, motor assembly 170 includes a plurality of inverters 172 to convert the direct current to alternating current for actuating one or more of a plurality of motors 174 of motor assembly 170 in electrical communication with the inverters 172. The plurality of motors 174 drive (e.g., rotate) elongated shaft 110 in response to the electrical energy received from fuel cell stack 160 for operating the components on the elongated shaft 110 as elongated shaft 110 is rotated, thereby powering aircraft 10 (Figure 1) and the components thereof.

Controller 200 of system 100 is, for example, a full authority digital engine (or electronics) control (e.g., a FADEC), or other suitable controller for controlling the various embodiments of system 100 and/or other components of aircraft 10 (Figure 1).

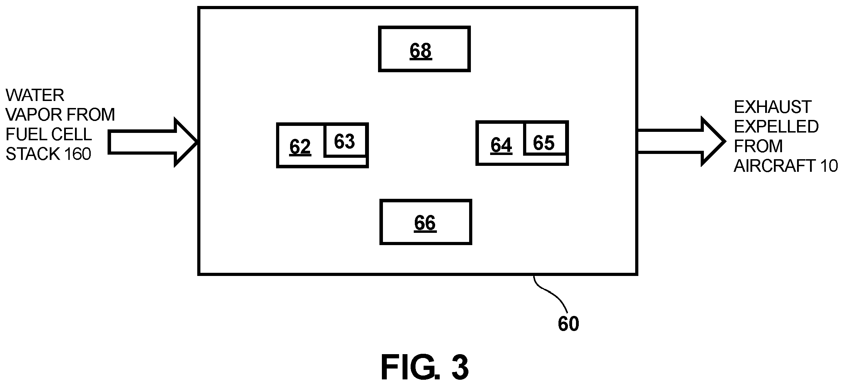

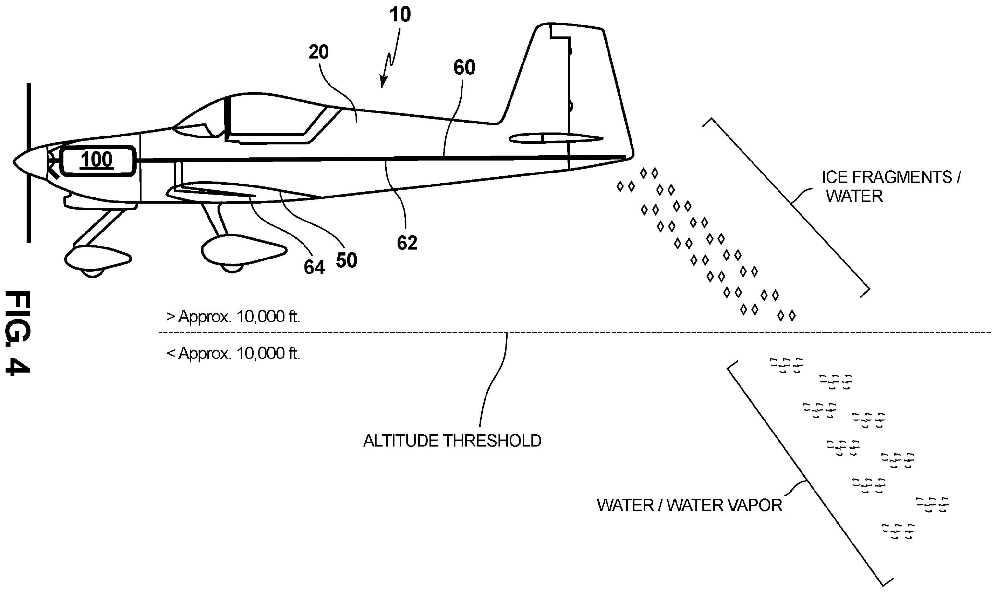

Referring now to Figures 3 and 4, in conjunction with Figure 1, as noted above, aircraft 10 includes an exhaust system 60 that receives the water vapor exhausted from fuel cell stack 160. Exhaust system 60 may include a fuselage portion 62 and/or a wing portion 64 each including a condenser 63, 65, respectively. Either or both condensers 63, 65 may be passive condensers 63, 65, e.g., including channels extending through or formed within fuselage portion 62 and wing portion 64, respectively, such that the water vapor is condensed as it travels through the channels via ambient heat and/or heat from other components of aircraft 10.

Alternatively or additionally, either or both condensers 63, 65 may be active condensers 63, 65, e.g., including channels extending through or formed within fuselage portion 62 and wing portion 64 and positioned adjacent a heat source of the condenser 63, 65 for condensing the water vapor as it travels through the channels. Further, a controller 66 and, in one embodiment, one or more pumps 68 controlled by controller 66, is provided to control the flow of water vapor through condensers 63, 65 and/or the heat sources associated therewith, if so provided.

In one embodiment, exhaust system 60 is configurable or controllable via controller 66 to condense the water vapor into ice, e.g., ice fragments, that are expelled, e.g., dropped, from aircraft 10 into the atmosphere. More specifically, at least when aircraft 10 is flying above an altitude threshold, e.g., approximately 10,000 feet, exhaust system 60 operates to condense the water vapor into ice prior to expulsion from aircraft 10 into the atmosphere. In this manner, water vapor cloud formation, which occurs when water vapor is released into the atmosphere at high altitudes, e.g., above approximately 10,000 feet, and which can have harmful effects, is avoided. Rather, the expelled ice fragments fall under gravity to below the altitude threshold, where the ice fragments melt into water and/or water vapor. However, below the altitude threshold, the water vapor does not create water vapor clouds but, rather, is simply evaporated into the atmosphere.

In one embodiment, Exhaust system 60 is configured and/or controlled via controller 66 such that the ice fragments formed are of sufficient size, temperature, state, etc. to not melt prior to falling below the altitude threshold.

The configuration of the ice fragments formed may depend on, for example, the altitude of aircraft 10, weather conditions, etc. and is controlled via controlling the one or more pumps 68, the heaters associated with condensers 63, 65, and/or via operating either or both of fuselage portion 62 or wing portion 64. That is, the condensing of the water vapor exhausted from fuel cell stack 160 (Figure 2) is controlled via exhaust system 60 to ensure that the substance (ice) expelled from aircraft 10 does not form water vapor clouds.

In one embodiment, exhaust system 60 is bypassed where it is determined that aircraft 10 is already below the altitude threshold and/or in other conditions where it is appropriate to expel the water vapor directly from fuel cell stack 160 (Figure 2) without the risk of water vapor cloud formation.

It should be understood the disclosed structure can include any suitable mechanical, electrical, and/or chemical components for operating the disclosed system or components thereof. For instance, such electrical components can include, for example, any suitable electrical and/or electromechanical and/or electrochemical circuitry, which may include or be coupled with one or more printed circuit boards. As appreciated, the disclosed computing devices and/or server can include, for example, a "controller," "processor," "digital processing device" and like terms, and which are used to indicate a microprocessor or central processing unit (CPU).

In one embodiment, the CPU is the electronic circuitry within a computer that carries out the instructions of a computer program by performing the basic arithmetic, logical, control and input/output (I/O) operations specified by the instructions, and by way of non-limiting examples, include server computers. In one embodiment, the controller includes an operating system configured to perform executable instructions. The operating system is, for example, software, including programs and data, which manages hardware of the disclosed apparatus and provides services for execution of applications for use with the disclosed apparatus. Those of skill in the art will recognize that suitable server operating systems include, by way of non-limiting examples, FreeBSD, OpenBSD, NetBSD^{®}, Linux, Apple^{®} Mac OS X Server^{®}, Oracle^{®} Solaris^{®}, Windows Server^{®}, and Novell^{®} NetWare^{®}. In one embodiment, the operating system is provided by cloud computing.

In one embodiment, the term "controller" may be used to indicate a device that controls the transfer of data from a computer or computing device to a peripheral or separate device and vice versa, and/or a mechanical and/or electromechanical device (e.g., a lever, knob, etc.) that mechanically operates and/or actuates a peripheral or separate device.

In one embodiment, the controller includes a storage and/or memory device. The storage and/or memory device is one or more physical apparatus used to store data or programs on a temporary or permanent basis. In one embodiment, the controller includes volatile memory and requires power to maintain stored information. In one embodiment, the controller includes non-volatile memory and retains stored information when it is not powered. In one embodiment, the non-volatile memory includes flash memory. In one embodiment, the non-volatile memory includes dynamic random-access memory (DRAM). In one embodiment, the non-volatile memory includes ferroelectric random-access memory (FRAM). In one embodiment, the non-volatile memory includes phase-change random access memory (PRAM). In one embodiment, the controller is a storage device including, by way of non-limiting examples, CD-ROMs, DVDs, flash memory devices, magnetic disk drives, magnetic tapes drives, optical disk drives, and cloud-computing-based storage. In one embodiment, the storage and/or memory device is a combination of devices such as those disclosed herein.

In one embodiment, the memory can be random access memory, read-only memory, magnetic disk memory, solid state memory, optical disc memory, and/or another type of memory. In one embodiment, the memory can be separate from the controller and can communicate with the processor through communication buses of a circuit board and/or through communication cables such as serial ATA cables or other types of cables. The memory includes computer-readable instructions that are executable by the processor to operate the controller. In one embodiment, the controller may include a wireless network interface to communicate with other computers or a server. In one embodiment, a storage device may be used for storing data. In one embodiment, the processor may be, for example, without limitation, a digital signal processor, a microprocessor, an ASIC, a graphics processing unit ("GPU"), field-programmable gate array ("FPGA"), or a central processing unit ("CPU").

The memory stores suitable instructions, to be executed by the processor, for receiving the sensed data (e.g., sensed data from GPS, camera, etc. sensors), accessing storage device of the controller, generating a raw image based on the sensed data, comparing the raw image to a calibration data set, identifying an object based on the raw image compared to the calibration data set, transmitting object data to a ground-based post-processing unit, and displaying the object data to a graphic user interface. Although illustrated as part of the disclosed structure, in one embodiment, a controller may be remote from the disclosed structure (e.g., on a remote server), and accessible by the disclosed structure via a wired or wireless connection. In one embodiment where the controller is remote, it may be accessible by, and connected to, multiple structures and/or components of the disclosed system.

The term "application" may include a computer program designed to perform particular functions, tasks, or activities for the benefit of a user. Application may refer to, for example, software running locally or remotely, as a standalone program or in a web browser, or other software which would be understood by one skilled in the art to be an application. An application may run on the disclosed controllers or on a user device, including for example, on a mobile device, an IoT device, or a server system.

In one embodiment, the controller includes a display to send visual information to a user. In one embodiment, the display is a cathode ray tube (CRT). In one embodiment, the display is a liquid crystal display (LCD). In one embodiment, the display is a thin film transistor liquid crystal display (TFT-LCD). In one embodiment, the display is an organic light-emitting diode (OLED) display. In one embodiment, on OLED display is a passive-matrix OLED (PMOLED) or active-matrix OLED (AMOLED) display. In one embodiment, the display is a plasma display. In one embodiment, the display is a video projector. In one embodiment, the display is interactive (e.g., having a touch screen or a sensor such as a camera, a 3D sensor, a LiDAR, a radar, etc.) that can detect user interactions/gestures/responses and the like. In one embodiment, the display is a combination of devices such as those disclosed herein.

The controller may include or be coupled with a server and/or a network. As used herein, the term "server" includes "computer server," "central server," "main server," and like terms to indicate a computer or device on a network that manages the disclosed apparatus, components thereof, and/or resources thereof. As used herein, the term "network" can include any network technology including, for instance, a cellular data network, a wired network, a fiber-optic network, a satellite network, and/or an IEEE 802.11a/b/g/n/ac wireless network, among others.

In one embodiment, the controller can be coupled with a mesh network. As used herein, a "mesh network" is a network topology in which each node relays data for the network. In general, mesh nodes cooperate in the distribution of data in the network. It can be applied to both wired and wireless networks. Wireless mesh networks can be considered a type of "Wireless ad hoc" network. Thus, wireless mesh networks are closely related to Mobile ad hoc networks (MANETs). Although MANETs are not restricted to a specific mesh network topology, Wireless ad hoc networks or MANETs can take any form of network topology. Mesh networks can relay messages using either a flooding technique or a routing technique. With routing, the message is propagated along a path by hopping from node to node until it reaches its destination. To ensure that all its paths are available, the network must allow for continuous connections and must reconfigure itself around broken paths, using self-healing algorithms such as Shortest Path Bridging. Self-healing allows a routing-based network to operate when a node breaks down or when a connection becomes unreliable. As a result, the network is typically quite reliable, as there is often more than one path between a source and a destination in the network. This concept can also apply to wired networks and to software interaction. A mesh network whose nodes are all connected to each other is a fully connected network.

In one embodiment, the controller may include one or more modules. As used herein, the term "module" and like terms are used to indicate a self-contained hardware component of the central server, which in turn includes software modules. In software, a module is a part of a program. Programs are composed of one or more independently developed modules that are not combined until the program is linked. A single module can contain one or several routines or sections of programs that perform a particular task.

In one embodiment, the controller includes software modules for managing various functions of the disclosed system or components thereof.

The disclosed structure may also utilize one or more controllers to receive various information and transform the received information to generate an output. The controller may include any type of computing device, computational circuit, or any type of processor or processing circuit capable of executing a series of instructions that are stored in memory. The controller may include multiple processors and/or multicore central processing units (CPUs) and may include any type of processor, such as a microprocessor, digital signal processor, microcontroller, programmable logic device (PLD), field programmable gate array (FPGA), or the like. The controller may also include a memory to store data and/or instructions that, when executed by the one or more processors, cause the one or more processors to perform one or more methods and/or algorithms.

The present technology may be described in the general context of computer-executable instructions, such as program modules, being executed by a computer. Generally, program modules include routines, programs, objects, components, data structures, etc., that perform particular tasks or implement particular abstract data types. The present technology may also be practiced in distributed computing environments where tasks are performed by remote processing devices that are linked through a communications network. In a distributed computing environment, program modules may be located in both local and remote computer-storage media including memory-storage devices.

In one embodiment, the described methods, programs, systems, codes, and the like may be converted to, or expressed in, a programming language or computer program. The terms "programming language" and "computer program," as used herein, each include any language used to specify instructions to a computer, and include (but is not limited to) the following languages and their derivatives: Assembler, Basic, Batch files, BCPL, C, C+, C++, Delphi, Fortran, Java, JavaScript, machine code, operating system command languages, Pascal, Perl, PL1, scripting languages, Visual Basic, metalanguages which themselves specify programs, and all first, second, third, fourth, fifth, or further generation computer languages. Also included are database and other data schemas, and any other meta-languages. No distinction is made between languages which are interpreted, compiled, or use both compiled and interpreted approaches. No distinction is made between compiled and source versions of a program. Thus, reference to a program, where the programming language could exist in more than one state (such as source, compiled, object, or linked) is a reference to any and all such states. Reference to a program may encompass the actual instructions and/or the intent of those instructions.

The examples set forth herein were presented in order to best explain, to describe particular applications, and to thereby enable those skilled in the art to make and use embodiments of the described examples. However, those skilled in the art will recognize that the foregoing description and examples have been presented for the purposes of illustration and example only. The description as set forth is not intended to be exhaustive or to limit the embodiments to the precise form disclosed. Rather, the specific features and acts described above are disclosed as example forms of implementing the Claims. Further, the word "comprising" is not intended to mean "consisting of" or "consisting essentially of."

Reference throughout this document to "one embodiment," "certain embodiments," "an embodiment," "various embodiments," "some embodiments," "various embodiments", or similar term, means that a particular feature, structure, or characteristic described in connection with that embodiment is included in at least one embodiment. Thus, the appearances of such phrases in various places throughout this specification are not necessarily all referring to the same embodiment.

The foregoing description of the technology has been presented for purposes of illustration and description and is not intended to be exhaustive or to limit the technology to the precise form disclosed. Many modifications and variations are possible in light of the above teaching. The embodiments disclosed were meant only to explain the principles of the technology and its practical application to thereby enable others skilled in the art to best use the technology in various embodiments and with various modifications suited to the particular use contemplated. The scope of the technology is to be defined by the following claims.

## Claims

1. A method to control exhaust water from a hydrogen fuel cell in an aircraft (10), said method comprising:
receiving said exhaust water from said hydrogen fuel cell;
altering a pressure and a temperature of said exhaust water to obtain an adjusted waste water at a desired pressure and a desired temperature; and
converting said adjusted waste water to particles of ice; and
expelling said particles of ice.

2. The method of claim 1, wherein said desired temperature corresponds to a temperature at which said aircraft (10) is operating.

3. The method of claim 1, wherein said desired pressure corresponds to a pressure at which said aircraft (10) is operating.

4. The method of claim 1, wherein said desired pressure and said desired temperature correspond to an altitude at which said aircraft (10) is operating.

5. The method of any one of claims 1 to 4 wherein said converting said adjusted waste water to particles of ice further comprises:
said particles of ice having a size sufficient such that, when expelled, said particles of ice fall from an altitude at which said aircraft (10) is operating to a lower altitude prior to said particles of ice undergoing a phase change wherein said lower altitude is low enough that said phase change does not result in a contrail.

6. An apparatus for managing waste water from a hydrogen fuel cell in an aircraft (10), said apparatus comprising:
an exhaust water receiver configured to be coupled to said hydrogen fuel cell;
a pressure and temperature adjuster coupled to said exhaust water receiver, said pressure and
temperature adjuster structured to produce an adjusted waste water, said adjusted waste water produced at a desired pressure and a desired temperature and said pressure and temperature adjuster structured to convert said adjusted waste water to particles of ice; and
an expeller coupled to said pressure and temperature adjuster , said expeller configured to expel said particles of ice.

7. The apparatus of claim 6 wherein said pressure and temperature adjuster comprises a thin-film fuel cell configured to be distributed across a wing of the aircraft (10).

8. The apparatus of claim 6 wherein said pressure and temperature adjuster comprises a thin-film fuel cell configured to be distributed across a leading edge of a wing of the aircraft (10).

9. The apparatus of claim 6 wherein said pressure and temperature adjuster comprises an air cycle machine with turbine expander blades wherein said turbine expander blades have hydrophobic properties.

10. The apparatus of claim 6 wherein said pressure and temperature adjuster comprises an air cycle machine with turbine expander blades wherein said turbine expander blades have a hydrophobic coating.

11. The apparatus of any one of claims 6 to 10, wherein said desired pressure and said desired temperature correspond to an altitude at which said aircraft (10) is operating.

12. The apparatus of any one of claims 6 to 10, wherein said desired temperature corresponds to a temperature at which said aircraft (10) is operating.

13. The apparatus of any one of claims 6 to 10, wherein said desired pressure corresponds to a pressure at which said aircraft (10) is operating.

14. The apparatus of any one of claims 6 to 13, wherein said phase converter produces said particles of ice having a size sufficient such that, when expelled by said expeller, said particles of ice fall from said altitude at which said aircraft (10) is operating to a lower altitude prior to said particles of ice undergoing a phase change.

## Patentansprüche

1. Verfahren zum Steuern von Abwasser von einer Wasserstoffbrennstoffzelle in einem Flugzeug (10), wobei das Verfahren Folgendes umfasst:
Empfangen des Abwassers von der Wasserstoffbrennstoffzelle;
Verändern eines Drucks und einer Temperatur des Abwassers, um Abwasser zu erhalten, das auf einen Solldruck und eine Solltemperatur eingestellt ist; und
Umwandeln des eingestellten Abwassers in Eispartikel; und
Ausstoßen der Eispartikel.

2. Verfahren nach Anspruch 1, wobei die Solltemperatur einer Temperatur entspricht, bei der das Flugzeug (10) betrieben wird.

3. Verfahren nach Anspruch 1, wobei der Solldruck einem Druck entspricht, bei dem das Flugzeug (10) betrieben wird.

4. Verfahren nach Anspruch 1, wobei der Solldruck und die Solltemperatur einer Höhe entsprechen, bei der das Flugzeug (10) betrieben wird.

5. Verfahren nach einem der Ansprüche 1 bis 4, wobei das Umwandeln des eingestellten Abwassers in Eispartikel ferner Folgendes umfasst:
die Eispartikel haben eine Größe, die ausreicht, damit die Eispartikel dann, wenn sie ausgestoßen werden, von einer Höhe, auf der das Flugzeug (10) betrieben wird, auf eine geringere Höhe fallen, bevor die Eispartikel eine Phasenumwandlung erfahren, wobei die geringere Höhe niedrig genug ist, damit die Phasenumwandlung keinen Kondensstreifen zur Folge hat.

6. Vorrichtung zum Managen von Abwasser von einer Wasserstoffbrennstoffzelle in einem Flugzeug (10), wobei die Vorrichtung Folgendes umfasst:
einen Abwasseraufnehmer, der konfiguriert ist, mit der Wasserstoffbrennstoffzelle gekoppelt zu werden;
eine Druck- und Temperatur-Einstelleinrichtung, die mit dem Abwasseraufnehmer gekoppelt ist, wobei die Druck- und Temperatur-Einstelleinrichtung so aufgebaut ist, dass sie eingestelltes Abwasser erzeugt, wobei das eingestellte Abwasser mit einem Solldruck und einer Solltemperatur erzeugt wird und wobei die Druck- und Temperatur-Einstelleinrichtung so aufgebaut ist, dass sie das eingestellte Abwasser in Eispartikel umwandelt; und
eine Ausstoßeinrichtung, die mit der Druck- und Temperatur-Einstelleinrichtung gekoppelt ist, wobei die Ausstoßeinrichtung konfiguriert ist, die Eispartikel auszustoßen.

7. Vorrichtung nach Anspruch 6, wobei die Druck- und Temperatur-Einstelleinrichtung eine Dünnschicht-Brennstoffzelle enthält, die so konfiguriert ist, dass sie über eine Tragfläche des Flugzeugs (10) verteilt ist.

8. Vorrichtung nach Anspruch 6, wobei die Druck- und Temperatur-Einstelleinrichtung eine Dünnschicht-Brennstoffzelle enthält, die so konfiguriert ist, dass sie über eine Vorderkante einer Tragfläche des Flugzeugs (10) verteilt ist.

9. Vorrichtung nach Anspruch 6, wobei die Druck- und Temperatur-Einstelleinrichtung eine Luftzyklusmaschine mit Turbinenexpansionsschaufeln enthält, wobei die Turbinenexpansionsschaufeln hydrophobe Eigenschaften besitzen.

10. Vorrichtung nach Anspruch 6, wobei die Druck- und Temperatur-Einstelleinrichtung eine Luftzyklusmaschine mit Turbinenexpansionsschaufeln enthält, wobei die Turbinenexpansionsschaufeln eine hydrophobe Beschichtung aufweisen.

11. Vorrichtung nach einem der Ansprüche 6 bis 10, wobei der Solldruck und die Solltemperatur einer Höhe entsprechen, bei der das Flugzeug (10) betrieben wird.

12. Vorrichtung nach einem der Ansprüche 6 bis 10, wobei die Solltemperatur einer Temperatur entspricht, bei der das Flugzeug (10) betrieben wird.

13. Vorrichtung nach einem der Ansprüche 6 bis 10, wobei der Solldruck einem Druck entspricht, bei dem das Flugzeug (10) betrieben wird.

14. Vorrichtung nach einem der Ansprüche 6 bis 13, wobei der Phasenwandler die Eispartikel mit einer Größe erzeugt, die ausreicht, damit die Eispartikel dann, wenn sie durch die Ausstoßeinrichtung ausgestoßen werden von der Höhe, bei der das Flugzeug (10) betrieben wird, auf eine geringere Höhe fallen, bevor die Eispartikel eine Phasenumwandlung erfahren.

## Revendications

1. Procédé de contrôle de l'eau d'échappement d'une pile à combustible à hydrogène dans un aéronef (10), ledit procédé comprenant :
la réception de ladite eau d'échappement de ladite pile à combustible à hydrogène ;
la modification de la pression et de la température de ladite eau d'échappement pour obtenir une eau de rejet ajustée à une pression et une température souhaitées ; et
la conversion de ladite eau de rejet ajustée en particules de glace ; et
l'expulsion desdites particules de glace.

2. Procédé selon la revendication 1, dans lequel ladite température souhaitée correspond à une température à laquelle ledit aéronef (10) fonctionne.

3. Procédé selon la revendication 1, dans lequel ladite pression souhaitée correspond à une pression à laquelle ledit aéronef (10) fonctionne.

4. Procédé selon la revendication 1, dans lequel ladite pression souhaitée et ladite température souhaitée correspondent à une altitude à laquelle l'aéronef (10) fonctionne.

5. Procédé selon l'une quelconque des revendications 1 à 4, dans lequel ladite conversion de ladite eau de rejet ajustée en particules de glace comprend, en outre :
lesdites particules de glace ayant une taille suffisante pour que, lorsqu'elles sont expulsées, lesdites particules de glace tombent d'une altitude à laquelle ledit aéronef (10) fonctionne à une altitude inférieure avant que lesdites particules de glace ne subissent un changement de phase, dans lequel ladite altitude inférieure est suffisamment basse pour que ledit changement de phase n'entraîne pas la formation d'une traînée de condensation.

6. Appareil de gestion des eaux de rejet provenant d'une pile à combustible à hydrogène dans un aéronef (10), ledit appareil comprenant :
un récepteur d'eau d'échappement configuré pour être couplé à ladite pile à combustible à hydrogène;
un dispositif de réglage de pression et de température couplé audit récepteur d'eau d'échappement, ledit dispositif de réglage de pression et de température étant structuré pour produire une eau de rejet ajustée, ladite eau de rejet ajustée étant produite à une pression et une température souhaitées et ledit dispositif de réglage de pression et de température étant structuré pour convertir ladite eau de rejet ajustée en particules de glace ; et
un expulseur couplé audit dispositif de réglage de pression et de température, ledit expulseur étant configuré pour expulser lesdites particules de glace.

7. Appareil selon la revendication 6, dans lequel ledit régulateur de pression et de température comprend une pile à combustible à couche mince configurée pour être répartie sur une aile de l'aéronef (10).

8. Appareil selon la revendication 6, dans lequel ledit dispositif de réglage de pression et de température comprend une pile à combustible à couche mince configurée pour être répartie sur le bord d'attaque d'une aile de l'aéronef (10).

9. Appareil selon la revendication 6, dans lequel ledit dispositif de réglage de pression et de température comprend une machine à cycle d'air avec des pales de turbine d'expansion, dans lequel lesdites pales de turbine d'expansion ont des propriétés hydrophobes.

10. Appareil selon la revendication 6, dans lequel ledit dispositif de réglage de pression et de température comprend une machine à cycle d'air avec des aubes d'expanseur de turbine, dans lequel lesdites aubes d'expanseur de turbine sont recouvertes d'un revêtement hydrophobe.

11. Appareil selon l'une quelconque des revendications 6 à 10, dans lequel ladite pression souhaitée et ladite température souhaitée correspondent à une altitude à laquelle ledit aéronef (10) fonctionne.

12. Appareil selon l'une quelconque des revendications 6 à 10, dans lequel ladite température souhaitée correspond à une température à laquelle ledit aéronef (10) fonctionne.

13. Appareil selon l'une quelconque des revendications 6 à 10, dans lequel ladite pression souhaitée correspond à une pression à laquelle ledit aéronef (10) fonctionne,

14. Appareil selon l'une quelconque des revendications 6 à 13, dans lequel ledit convertisseur de phase produit lesdites particules de glace ayant une taille suffisante pour que, lorsqu'elles sont expulsées par ledit expulseur, lesdites particules de glace tombent de ladite altitude à laquelle ledit aéronef (10) fonctionne à une altitude inférieure avant que lesdites particules de glace ne subissent un changement de phase.
